# EUROPEAN PATENT APPLICATION

(11) **EP 2 452 749 A1**
(43) Date of publication of application: **16.05.2012**
(21) Application number: 10191124.6
(22) Date of filing: 13.11.2010
(51) Int. Cl.: B01J 31/04, B01J 31/08, B01J 31/12, B01J 31/02

(54) **Emulsifiers for Catalysts**

(71) Applicant: Cytec Austria GmbH, 8402 Werndorf (AT)
(72) Inventor: PAAR, Willi, Dr., 8010, Graz (AT); BILLIANI, Johann, Dr., 8042, Graz (AT)
(74) Representative: Deckers, Hellmuth Alexander

(57) **Abstract**

The invention relates to an emulsifiable catalyst composition which comprises at least one of metal salts, metal complexes, and acids, and at least one amphiphilic compound which is a graft copolymer based on oils or diene homo-and copolymers that bear graft branches derived from olefinically unsaturated monomers, and an average, per molecule, of at least one cationic group or cationogenic group that forms cations when contacted with an acid, to a process for its preparation, and a method of use thereof as catalyst in aqueous coating compositions.

## Description

### Field of the Invention

The invention relates to emulsifiers for catalysts, and to catalyst compositions comprising these emulsifiers, particularly for catalysing the crosslinking process in coating compositions.

### Background of the Invention

Catalysts are used in surface coating compositions to accelerate the crosslinking reactions, and thereby, development of the mechanical properties and chemical resistance of coatings applied to substrates.

In most cases, these catalysts are acids, metal salts or metal complexes. Catalysts need to be close to the locus of the chemical reaction that they catalyse, which means that water-soluble catalysts must pass a phase boundary from the aqueous phase to the organic phase constituting the coating film. Amphiphilic compounds are needed that facilitate this transition from one phase to the other, which have a hydrophilic binding site for acids or metal ions and complexes that provide the catalytic activity, and a lipophilic part that provides solubility in the organic phase.

It is therefore an object of the invention to provide amphiphilic compounds that act as emulsifiers for catalysts based on metal compounds, especially metal salts and metal complexes, and also, acid catalysts, which amphiphilic compounds have a hydrophilic binding site for acids or metal ions and complexes that provide the catalytic activity, and a lipophilic part that provides solubility in the organic phase.

A further object of the invention are compositions of metal-based or acid-based catalysts, and amphiphilic compounds which have a hydrophilic binding site for acids or metal ions and complexes that provide the catalytic activity, and a lipophilic part that provides solubility in the organic phase. These compositions can be emulsified in an aqueous medium.

A still further object of the invention is a catalysed coating composition that comprises a coating binder, optionally, a crosslinking agent, and an emulsified catalyst which comprises at least one of metal salts, metal complexes, and acids, and at least one amphiphilic compound have a hydrophilic binding site for acids or metal ions and complexes that provide the catalytic activity, and a lipophilic part that provides solubility in the organic phase.

A still further object of the invention is a procedure to catalyse the crosslinking of a coating film by adding to a coating composition an emulsified catalyst which comprises at least one of metal salts, metal complexes, and acids, and at least one amphiphilic compound have a hydrophilic binding site for acids or metal ions and complexes that provide the catalytic activity, and a lipophilic part that provides solubility in the organic phase.

### Summary of the Invention

The invention provides an emulsifiable catalyst composition which comprises at least one of metal salts, metal complexes, and acids, and at least one amphiphilic compound have a hydrophilic binding site for acids, metal ions and metal complexes that provide the catalytic activity, and a lipophilic part that provides solubility in the organic phase. The hydrophilic binding site is preferably cationic.

The metal salts are preferably selected from salts of the so-called "transition metals", viz., those of groups IIIb to IIb of the periodic system of the elements, as well as the elements of the group of lanthanides, and the elements Mg, Ca, Sr, Ba of the group of earth alkali elements, and the elements Ga, Ge, As, In, Sn, Sb, Tl, Pb, and Bi, viz. elements of groups IIIa to Va and of the fourth to sixth period. The anions may be selected from the group consisting of halogenides, particularly fluorides, chloride, and bromides, nitrate, sulphate, and anions of organic acids such as acetate, lactate, 2-ethylhexanoate, naphthenate, dimethylol propionate, tartrate, and mixed organic-inorganic acids such as methane sulphonate.

Metal complexes which are useful for the invention comprise at least one of the metals mentioned supra, and chelate formers such as hydroxy acids, oxyacids, amino acids, hydroxyamines, diamines, polyamines, hydroxythiols, mercaptoacids, and aminothiols.

Acids which are useful for the invention are preferably organic acids, particularly organic sulphonic and phosphonic acids, and also such organic carboxylic acids that have electron-withdrawing groups adjacent to the carboxyl group, adjacent meaning here that the carbon atom carrying the carboxyl group and the carbon atom carrying an electron-withdrawing group closest to the first-mentioned carbon atom are separated by not more than two aliphatic carbon atoms. Such acids are preferably selected from the group consisting of aromatic sulphonic, phosphonic and carboxylic acids, where it is also possible that two or more acid groups are in the same molecule, and the acid groups may also be combination sof those mentioned. Preferred examples include toluene sulphonic acid, naphthalene sulphonic acid, naphthalene disulphonic acid, and methane sulphonic acid.

Emulsifiers useful for the invention are graft copolymers based on diene homo-and copolymers that bear graft branches derived from olefinically unsaturated monomers which comprise a mass fraction of at least 10 % of olefinically unsaturated carboxylic acids, and an average, per molecule, of at least one cationic group or cationogenic group that forms cations when contacted with an acid in an aqueous environment or another environment comprising a polar liquid or melt that supports dissociation of ionogenic substances. Other useful graft bases include natural oils which are esters of glycerol with fatty acids, where those oils that have at least one olefinic unsaturation in their molecules are preferred.

The emulsifiable catalyst compositions preferably accelerate those reactions that contribute to crosslinking of thermoset polymeric materials, and of oxidatively crosslinked polymeric materials, and also, of polymeric materials that undergo crosslinking by reactions induced by radicals. Such radicals can be formed by thermal decay, or also, by photo-induced decay, pursuant to irradiataion with visible or UV light, or actinic radiation such as gamma radiation and electron beams.

### Detailed Description of the Preferred Embodiments

The emulsifier is preferably based on the graft product of a diene homo- or copolymer **A** having a mass fraction of at least 50 % of moieties derived from aliphatic linear, branched or cyclic dienes in the polymer. In the connection with this inventions, a "moiety derived from a diene" is a unit CₙH₂ₙ₋₂ in the case of a linear or branched aliphatic diene, and a unit CₙH₂ₙ₋₄ in the case of a cyclic diene, where n may be a number from 4 to 20, and wherein the diene may also be substituted with one or more halogen atoms, with one or more alkoxy groups having from 1 to 4 carbon atoms in the alkoxy group, or with one or more alkyl groups having from 1 to 4 carbon atoms in the alkyl group. The weight average molar mass ***M***_{w} of the diene homo- or copolymer **A** is preferably from 500 g/mol to 5000 g/mol. In this case, the diene homo- or copolymer forms the lipophilic part of the emulsifier.

Other useful graft substrates are other lipophilic materials, particularly natural oils which are esters of glycerol and fatty acids. Grafting is facilitated if these oils have at least one olefinic unsaturation in their molecules, which stems from at least one olefinically unsaturated fatty acid. Processed oils such as stand oil or boiled oils, and interesterified oils can also be used.

The graft substrate, preferably the diene homo-or copolymer **A,** is grafted in a first reaction step with an unsaturated cycloaliphatic or linear or branched aliphatic acid **B1** which may have from 3 to 12 carbon atoms, or an unsaturated cycloaliphatic or linear or branched aliphatic acid anhydride **B2** which may have from 4 to 12 carbon atoms, to form a graft product **AB.** The acid **B1** may preferably be selected from the group consisting of acrylic acid, methacrylic acid, ethacrylic acid, vinylacetic acid, crotonic and isocrotonic acids, and sorbic acid, fumaric acid, and mesaconic acid, and the acid anhydride **B2** may be preferably be selected from the group consisting of maleic anhydride, citraconic anhydride, itaconic anhydride, and tetrahydrophthalic anhydride and substitution products of these. It is, of course, also possible to use mixtures of two or more of the acids **B1,** mixtures of two or more of the acid anhydrides **B2,** as well as mixtures of at least one of acids **B1** and at least one of anhydrides **B2.**

The ratio of the mass ***m***_{A} of the graft substrate, preferably the diene homo-or copolymer **A,** and the sum ***m***_{B} of the masses of acids **B1** and acid anhydrides **B2** is preferably from 4:1 to 15:1, and particularly preferred, from 5:1 to 12:1.

The graft product **AB** is optionally reacted, in a second reaction step, with a monohydric aliphatic linear or branched alcohol **D** having from 1 to 8 carbon atoms, wherein the amount of alcohol **D** is such that at least 90 % of all acid anhydride groups present in the graft product **AB** are ring-opened under formation of an ester bond with the said alcohol **D.** It is preferred to use an amount of alcohol **D** that is sufficient to consume all anhydride groups present in the graft product **AB** under formation of a half ester with a remaining carboxyl group. Of course, if there are no anhydride groups present in the graft product **AB,** this reaction step can be omitted. The reaction conditions, particularly the temperature and the amount of alcohol **D,** have to be chosen in a way to suppress esterification of the remaining carboxyl groups in the reaction product of **AB** and **D.**

In the next step, the graft product **AB,** or its reaction product with the alcohol **D,** is reacted with an amine **C** having at least one tertiary amino group, and at least one primary or secondary amino group. Preferably, this reaction is conducted in a way that all acid and acid anhydride groups present in the graft product **AB** or its reaction product with the alcohol **D,** and all acid groups created by reaction of the acid anhydride groups in the graft product **AB** with the alcohol **D** according to the second step are consumed by reaction with the primary or secondary amino groups of the amine **C,** under formation of an amide linkage in the case of reaction with an acid group, or under formation of an imide linkage in the case of reaction with an acid anhydride group. In the formation of an imide, the alcohol used to ring-open the anhydride ring is expelled during the reaction with the amine **C.** The remaining acid number after reaction with the amine **C** shall preferably not be more that 2 mg/g, particularly, not more that 1.5 mg/g, and especially preferred, not more that 1 mg/g. Likewise, the acid anhydride groups shall be consumed to a similar extent, leaving a content of unreacted acid anhydride groups corresponding to acid numbers of not be more that 2 mg/g, particularly, not more that 1.5 mg/g, and especially preferred, not more that 1 mg/g.

Preferably, the amine **C** has one tertiary and one primary or secondary amino group. In the case of reaction with a graft product made from unsaturated acid anhydrides **B2,** amines having a primary and a tertiary amino group are preferred, while in the reaction with a graft product based on olefinically unsaturated acids **B1,** amines having a secondary and a tertiary amino group are preferred. Useful amines having one primary and one tertiary amino group are selected from the group consisting of N,N-dimethylamino propylamine, N,N-diethylamino propylamine, N-aminoethylpiperidine, N-aminoethyl morpholine, 1-methyl-2-(2-aminoethyl)pyrrolidine, N-(2-aminoethyl) pyrrolidine, N-aminopropylpiperidine, N-aminopropyl morpholine, 1-methyl-2-(2-aminopropyl)pyrrolidine, and N-(2-aminopropyl) pyrrolidine. Especially preferrd are N,N-dialkylaminoalkylamines R¹₂N-R²-NH₂, where R¹ is methyl or ethyl, and R2 is a linear alkylene group having from two to four carbon atoms, particularly 3-dimethylamino-1-propylamine and 3-diethylamino-1-propylamine. Preferred amines having one secondary and one tertiary amino group are N-methylpiperazine, N,N,N',N'-tetramethyl diethylene triamine, and N,N,N',N'-tetramethyl dipropylene triamine.

The resulting amino-functional product which is referred to a **E,** made by reacting **A, B,** and **C** as described herein, and which comprises moieties derived from **A, B** and **C,** has tertiary amino groups and one or both of amide and imide groups. Its amine number, measured as the ratio of that mass of potassium hydroxide that needs the same amount of acid to be neutralised as the sample under consideration, and the mass of that sample, or mass of solids in the sample if the substance to be characterised is dissolved or dispersed in a solvent, is preferably from 20 mg/g to 120 mg/g, and particularly preferred, from 30 mg/g to 100 mg/g.

In the last step, this amino-functional compound **E** is subjected to a graft reaction in aqueous emulsion, comprising dispersing the product **E** in a mixture of water and an acid for at least partial neutralisation, wherein the amount of acid is preferably chosen such that the amount of substance of acid hydrogen atoms in the acid used for neutralisation is from 10 % to 90 % of the all tertiary amino groups present in the amino-functional compound **E,** and subjecting the dispersion thus obtained to a graft polymerisation reaction with at least one olefinically unsaturated monomer **F.** It is preferred to choose the amounts of water, neutralisation acid and amino-functional compound **E** in a way that the mass fraction of solids in the dispersion is between 20 % and 40 %. Preferred acids for neutralisation are formic acid, acetic acid, dimethylolpropionic acid, and lactic acid.

The at least one olefinically unsaturated monomer **F,** also referred to as "vinyl monomer" has at least one olefinically unsaturated group which is capable of radical-induced polymerisation. Preferably, the olefinically unsaturated monomer **F** which has at least one olefinically unsaturated group which is capable of radical-induced polymerisation is selected from the group consisting of styrene, alpha-methyl styrene, vinyl toluene, esters of monohydric aliphatic linear, branched or cyclic alcohols having from 1 to 18 carbon atoms and mono-olefinically unsaturated organic monocarboxylic acids having form 3 to 12 carbon atoms, diesters of aliphatic monounsaturated dicarboxylic acids having from 4 to 12 carbon atoms, monoesters of the mono-olefinically unsaturated organic monocarboxylic acids having form 3 to 12 carbon atoms with aliphatic alcohols having more than one hydroxyl group, vinyl and allyl ethers of mon- or dihydric alcohols having up to 12 carbon atoms, vinyl ketones, unsaturated nitriles, vinyl esters of monocarboxylic linear or branched aliphatic acids having from two to twelve carbon atoms, and commercially available mixtures of vinyl esters of highly alpha-branched aliphatic monocarboxylic acids having from five to twelve carbon atoms.

It is preferred to use exclusively mono-unsaturated vinyl monomers **F1,** although a mass fraction of from 0.1 % up to 10 %, preferably of from 0.2 % up to 8 %, and particularly preferred, of from 0.4 % up to 6 %, of multiply unsaturated vinyl monomers **F2,** can be used together with mono-unsaturated vinyl monomers **F1.**

Vinyl monomers **F1** useful for the invention include styrene, alpha-methyl styrene, the commercially available mixture known as vinyl toluene, esters of monohydric aliphatic linear, branched or cyclic alcohols having from 1 to 18 carbon atoms and mono-olefinically unsaturated organic acids such as acrylic acid, methacrylic acid, ethacrylic acid, vinyl acetic acid, crotonic and isocrotonic acid. It is also possible to use diesters of aliphatic monounsaturated dicarboxylic acids such as maleic, fumaric, citraconic, mesaconic and itaconic acids with the aliphatic alcohols mentioned supra. Further mono-unsaturated vinyl monomers include also monoesters of the monocarboxylic acids mentioned supra with aliphatic alcohols having more than one hydroxyl group, such as, for example, hydroxyethyl (meth)acrylate or hydroxypropyl (meth)acrylate, where (meth)acrylate stands for either acrylate or methacrylate, vinyl and allyl ethers of mon- or dihydric alcohols, vinyl ketones, unsaturated nitriles such as acrylonitrile and methacrylonitrile, vinyl esters of monocarboxylic linear or branched aliphatic acids having from two to twelve carbon atoms such as vinyl acetate, vinyl propionate, vinyl 2-ethyl hexanoate, vinyl neodecanoate (vinyl alpha, alpha-dimethyloctanoate), and commercially available mixtures of vinyl esters of highly alpha-branched aliphatic monocarboxylic acids having from five to twelve carbon atoms.

Multi-unsaturated vinyl monomers **F2** useful for the invention include divinyl benzene, esters of the olefinically monounsaturated acids mentioned supra, or ethers of vinyl or allyl or methallyl alcohol, with dihydric or polyhydric alcohols where two or more of the hydroxyl groups of these dihydric or polyhydric alcohols are esterified or etherified, such as ethylene glycol divinyl ether, ethylene glycol diallyl ether, ethylene glycol di(meth)acrylate, butylene glycol divinyl ether, butylene glycol diallyl ether, butylene glycol di(meth)acrylate, neopentylglycol di(meth)acrylate, glycerol di- and tri-(meth)acrylate, and trimethylol propane di- and tri-(meth)acrylate.

The ratio of the mass of the olefinically unsaturated monomers **F1** to the mass of the amino-functional compound **E** is preferably from 5 % to 70 %, particularly preferably, from 10 % to 60 %, and especially preferred, from 15 % to 50 %. The ratio of the mass of the multiply olefinically unsaturated monomers **F2** to the mass of the amino-functional compound E is preferably from 0.5 % to 7 %, particularly preferably, from 1 % to 6 %, and especially preferred, from 1.5 % to 5 %.

The graft product EF preferably has a weight average molar mass of at least 10 kg/mol, particularly preferably, from 20 kg/mol to 80 kg/mol.

The amino-functional compound **E** is preferably made from an adduct **AB** of a polybutadiene oil as component **A,** and maleic anhydride as component **B,** where the polybutadiene oil preferably has a weight-average molar mass of from 500 g/mol to 5000 g/mol. Copolymers of butadiene and pentadiene are also preferred. In such an adduct of a butadiene homo- or copolymer, and maleic anhydride, the ratio of the mass *m*(MA) of maleic anhydride and the mass *m*(BP) of butadiene homo- or copolymer in the said adduct is preferably between 1 : 4 and 1 : 16.

The cyclic anhydride groups present in the adduct which comprises moieties -CH₂-CH=CH-CH₂- derived from butadiene and moieties -CO-CH-CH-CO-O- derived from maleic anhydride are preferably opened by reaction with an aliphatic monoalcohol **D** having from one to eight carbon atoms, preferably methanol. This intermediate **ABD** is then reacted with the amine **C** in a way that preferably all of the carboxyl groups which result from this ring-opening reaction of the cyclic anhydride are consumed. The reaction product **E** preferably has an amine number of from 30 mg/g to 100 mg/g. As explained supra, in another reaction sequence, the adduct **AB** is directly reacted with the amine **C.**

The reaction products **EF** may be diluted with inert solvents which are water-compatible, such as acetone, or ethers of ethylene glycol or oligomeric ethylene glycols such as diethylene glycol, triethylene glycol, and tetraethylene glycol, to adjust the viscosity of these mixtures.

The amino-functional compounds **E** are then at least partially neutralised with an inorganic or organic acid, preferably one or more of formic acid, acetic acid, lactic acid, and phosphoric acid. The neutralised compounds **E** are then converted to an aqueous solution or dispersion. It is also possible to conduct neutralisation and dispersion or dissolution concurrently. The mass fraction of solute or emulsified product in the solution or dispersion is preferably from 20 % to 40 %.

The grafting step is then conducted by adding the olefinically unsaturated monomers **F** to the solution or dispersion at a temperature of from 30 °C to 90 °C, together with a radical initiator, where further initiator may be added after the completed addition of monomers **F** to consume all remaining monomers.

Another preferred reaction sequence is to first graft the compound **E** in solution, and then neutralising and dissolving ot dispersing the graft product in water.

The graft product **EF** is particularly suited as emulsifier for metal salts and metal complexes which catalyse the crosslinking reactions in coating compositions, particularly in aqueous coating compositions, where crosslinking can occur by oxydation as in alkyd resins, or by transesterification, transamidation and particularly, transurethanisation as in isocyanate-crosslinked coating binders. When used as emulsifier for acids, such emulsified catalysts can be used in crosslinking with amino resins which may optionally be etherified.

Among the metals mentioned hereinbefore, preferred are metals selected from the group consisting of Mg, Ca, Sr, Ba, Ce, Ti, Zr, Hf, Mn, Fe, Co, Ni, Zn, Cd, Ga, In, Ge, Sn, Pb, Sb, and Bi, and also, mixtures of two or more of these.

Emulsification can be effected by simple mixing of a metal salt, a metal complex, or an acid with the emulsifier, and optionally diluting the mixture thus obtained with water or with a water-compatible solvent such a ethylene glycol ethers, or acetone. It is also possible to dissolve metal salts or metal oxides, the latter optionally in the presence of acids, in the emulsifier or an aqueous solution thereof, in a pearl mill or a similar high shear equipment.

The following examples serve to further explain the invention, without limitation thereof.

As used herein, the following terms are explained:

The amine number is defined, according to DIN 53 176, as the ratio of that mass ***m***_{KOH} of potassium hydroxide that consumes the same amount of acid for neutralisation as the sample under consideration, and the mass ***m***_{B} of that sample, or the mass of solid matter in the sample in the case of solutions or dispersions, the commonly used unit is "mg/g".

The acid number is defined, according to DIN EN ISO 3682 (DIN 53 402), as the ratio of that mass ***m***_{KOH} of potassium hydroxide which is needed to neutralise the sample under examination, and the mass ***m***_{B} of this sample, or the mass of the solids in the sample in the case of a solution or dispersion; its customary unit is "mg/g".

### Example 1 Preparation of Compound E

In a resin kettle, 1400 g of a liquid polybutadiene having a weight average molar mass of 3 kg/mol (Polyoel® B 180, Evonik) and 200 g of maleic anhydride were reacted in the presence of 2 g of N, N'-diphenyl-p-phenylene diamine as inhibitor under a nitrogen blanket at a temperature between 180 °C and 210 °C until no more free anhydride could be detected. After cooling to 60 °C, 70 g of methanol were added over thirty minutes. The reaction mixture was stirred at this temperature until an acid number of 70 mg/g was reached. Then, 260 g of 3-diethylamino-1-propylamine were added in the course of one hour. After complete addition, the reaction mixture was heated to 160 °C and kept at this temperature until no more methanol was distilled off, and the acid number had reached a value of below 3 mg/g. The reaction mixture was then cooled to 100 °C, and diluted by addition of methoxypropanol to a mass fraction of solids of 80 %. The product had an amine number of 60 mg/g.

### Example 2 Preparation of a dispersion of the compound E

1000 g of the solution of Example 1 were slowly added under stirring to a mixture of 2400 g of deionised water and 39.2 g of formic acid. After stirring for a further hour, a brownish homogeneous dispersion having a mass fraction of solids of 23.3 %, and a pH of 3.7 was obtained.

### Example 3 Preparation of the graft product EF

344 g of the dispersion of Example 2 were charged in a recation vessel equipped with a reflux condenser, a dropping funnel, and nitrogen purging, 35 g of deionised water were added, and the mixture was heated to 80 °C. At this temperature, a mixture of 40 g of styrene, 2 g of trimethylolpropane trimethacrylate, and 2 g of azobis-isovaleronitrile were uniformly added during six hours. After a post-reaction of four hours at 85 °C, a dispersion with a mass fraction of solids of at least 29 % was obtained.

The following parameters were determined on this dispersion:

| | |
|---|---|
| mass fraction of solids | 29.3 % |
| amine number | 46 mg/g |
| weight average molar mass | 50 kg/mol |

### Example 4 Preparation of a titanium catalyst

340 g (1 mol) of tetra-n-butyl orthotitanate were charged into a reaction vessel, mixed with 236 g of anhydrous 2-methylpentane-2,4-diol (2 mol) and heated to 65 °C. Under vigorous stirring, 148 g (2 mol) of n-butanol were distilled off under reduced pressure. The reaction mixture was cooled to 25 °C, and 177 g (0.5 mol) of the epoxy amine adduct of Example 4 were added, together with 16.6 g (0.5 mol) of para-formaldehyde (mass fraction of formaldehyde 91 %). The mixture was then heated to 130 °C and kept at this temperature for one further hour. The temperature was gradually lowered to 100 °C, and further 148 g of n-butanol were distilled off under reduced pressure. 472 g of a titanium catalyst TC were obtained.

### Example 5 Preparation of catalyst pastes

Catalyst pastes have been prepared by mixing the ingredinets according to table 1.

**Table 1**

| Example | 51 | 52 | 53 | 54 | 55 | 56 |
|---|---|---|---|---|---|---|
| mass of dispersion of Ex. 3 in g | 641 | 641 | 446 | 461 | 567 | 571 |
| solvent | BC | BC | | | | |
| mass of solvent in g | 45 | 45 | | | | |
| catalyst | BT | OT | TC | Bi₂O₃ | BO | ZO |
| mass of catalyst in g | 224 | 223 | 252 | 205 | 247 | 222 |
| mass fraction of metal in catalyst in % | 477 | 345 | 9 | | 165 | 10 |
| acid | Ac | Ac | La | La | La | La |
| mass of acid in g | 9 | 9 | 24 | 334 | 36 | 36 |
| mass of water in g | | | 274 | | 15 | 173 |
| mass fraction of metal in paste in % | 107 | 77 | 228 | 182 | 41 | 222 |

### Abbreviations:

- BC: butyl cellosolve
- BT: dibutyl tin oxide
- OT: dioctyl tin oxide
- TC: titanium catalyst TC of example 4
- Bi₂O₃: bismuth trioxide
- BO: bismuth octoate
- ZO: zinc octoate

### Example 6 Epoxy Amine Resin Binder with Capped Isocyanate Crosslinker

176 g (0.8 mol) of nonyl phenol, 130 g (1.0 mol) of diethylaminopropylamine, 105 g (1 mol) of diethanolamine and 228 g (1.0 mol) of bisphenol A were charged into a vessel and heated to 70 °C. 1100 g of a liquid epoxy resin based on bisphenol A having a weight average molar mass ***M***_{w} of 380 g/mol were added under stirring for one hour while a strongly exothermic reaction occurred. The temperature of the reaction mass was allowed to rise to 160 °C under gentle cooling. When the epoxy resin addition was completed, the temperature was kept constant at 160 °C for one more hour. Dipropylene glycol was added to dilute the product to a solution with a mass fraction of solids of 80 %. The resin solution thus obtained was cooled to between 70 °C and 80 °C, and 608 g (2.0 mol) of toluylene diisocyanate were added which was half capped with butyl glycol (ethylene glycol monobutyl ether). This temperature range was maintained for approximately one further hour until no more free isocyanate groups could be detected. The reaction product was cooled and diluted with a mixture of 33 g (0.72 mol) of formic acid and 1700 g of deionised water, and further homogenised under stirring for one hour. The mass fraction of solids of the resulting dispersion was then adjusted to 40 % by addition of more water.

### Example 7 Catalysed CED Paint

100 g each of the dispersion of Example 6 were mixed with the catalyst compositions of Examples 5.1 to 5.6, where the amount of catalyst composition of examples 5.1 to 5.5 was chosen to have a mass fraction of metal (Sn, Ti, Bi or Zn) in the catalysed paint of 1 %, and of 0.5 % in the case of the catalyst composition of Example 5.6, respectively.

The clear paints thus obtained were applied to water-rinsed, zinc-phosphated steel panels. The coated steel panels were dried under air for thirty minutes and then stoved at 160 °C for twenty minutes. The dry film thickness was 25 µm in all cases.

A corrosion test was made using the salt spray test, where a coated steel panel, precoated with zinc and phosphatised, is subjected to salt spray according to DIN EN ISO 7253, degree of rust formation e1 classified as
"0" no rust staining
"1" single rust stains
"2" about 20 % of the surface are covered with rust stains
"3" more than 50 % of the surface are covered with rust stains
"4" rust covers the whole surface,
and e2 states the distance of the corrosion creep front ("Unterwanderung") from a scratch in the paint film.

For all paints of this example, e1 was "0", and e2 was less than 1 mm after 1500 h of exposure.

### Example 8 Comparative

In comparative example 8.1, dibutyltin oxide (BT) was homogenised in 100 g of the dispersion of Example 6 in an amount to have a mass fraction of Sn in the catalysed paint of 1 %; and similarly in comparative example 8.2, bismuth octoate (BO) was homogenised in 100 g of the dispersion of Example 6 in an amount to have a mass fraction of Bi in the catalysed paint of 1 %. The catalysed paints were applied to steel panels and cured as described in Example 7.

The following data were found after 1500 h of exposure in the salt spray test as supra:

| | | |
|---|---|---|
| paint 8.1 | e1: "2"; | e2: 5 mm |
| paint 8.2 | e1: "3": | e2: large variations in distance due to inhomogeneity of film |

## Claims

1. An emulsifiable catalyst composition which comprises at least one of metal salts, metal complexes, and acids, and at least one amphiphilic compound which is a graft copolymer based on oils or diene homo-and copolymers that bear graft branches derived from olefinically unsaturated monomers, and an average, per molecule, of at least one cationic group or cationogenic group that forms cations when contacted with an acid.

2. The emulsifiable catalyst composition of claim 1 wherein the metal salt is selected from the group consisting of salts of metals of groups IIIb to IIb of the periodic system of the elements, as well as the elements of the group of lanthanides, and the elements Mg, Ca, Sr, Ba of the group of earth alkali elements, and the elements Ga, Ge, As, In, Sn, Sb, Tl, Pb, and Bi.

3. The emulsifiable catalyst composition of claim 1 wherein the metal complex is selected from the group consisting of complexes of metals of groups IIIb to IIb of the periodic system of the elements, as well as the elements of the group of lanthanides, and the elements Mg, Ca, Sr, Ba of the group of earth alkali elements, and the elements Ga, Ge, As, In, Sn, Sb, Tl, Pb, and Bi.

4. The emulsifiable catalyst composition of claim 1 wherein the catalyst is an inorganic or organic acid.

5. The emulsifiable catalyst composition of claim 1 wherein the amphiphilic compound is a graft reaction product EF which has a weight average molar mass of at least 10 kg/mol, and comprises moieties derived from
- a diene homo- or copolymer **A,**
- an unsaturated cycloaliphatic or linear or branched aliphatic acid **B1** or an unsaturated cycloaliphatic or linear or branched aliphatic acid anhydride B2 which may have from 3 to 12 carbon atoms,
- an amine **C** having at least one tertiary amino group, and at least one primary or secondary amino group, and
- at least one olefinically unsaturated monomer **F** which has at least one olefinically unsaturated group which is capable of radical-induced polymerisation.

6. The emulsifiable catalyst composition of claim 5 wherein the diene homo- or copolymer **A** has a mass fraction of at least 50 % in the polymer of moieties derived from aliphatic linear or branched dienes CₙH₂ₙ₋₂ or from cyclic dienes CₙH₂ₙ₋₄ where n may be a number from 4 to 20, and wherein the diene may also be substituted with one or more halogen atoms, with one or more alkoxy groups having from 1 to 4 carbon atoms in the alkoxy group, or with one or more alkyl groups having from 1 to 4 carbon atoms in the alkyl group.

7. The emulsifiable catalyst composition of claim 5 wherein the unsaturated cycloaliphatic or linear or branched aliphatic acid **B1** which may have from 3 to 12 carbon atoms, is selected from the group consisting of acrylic acid, methacrylic acid, ethacrylic acid, vinylacetic acid, crotonic and isocrotonic acids, and sorbic acid, fumaric acid, and mesaconic acid.

8. The emulsifiable catalyst composition of claim 5 wherein the unsaturated cycloaliphatic or linear or branched aliphatic acid anhydride **B2** which may have from 4 to 12 carbon atoms, is selected from the group consisting of maleic anhydride, citraconic anhydride, itaconic anhydride, and tetrahydrophthalic anhydride and substitution products of these.

9. The emulsifiable catalyst composition of claim 5 wherein the amine **C** having at least one tertiary amino group, and at least one primary or secondary amino group are selected from the group of amines having one primary and one tertiary amino group which are selected from the group consisting of N,N-dimethylamino propylamine, N,N-diethylamino propylamine, N-aminoethylpiperidine, N-aminoethyl morpholine, 1-methyl-2-(2-aminoethyl)pyrrolidine, N-(2-aminoethyl) pyrrolidine, N-aminopropylpiperidine, N-aminopropyl morpholine, 1-methyl-2-(2-aminopropyl)pyrrolidine, and N-(2-aminopropyl) pyrrolidine, and from the group of amines having one secondary and one tertiary amino group which are selected from the group consisting of N-methylpiperazine, N,N,N',N'-tetramethyl diethylene triamine, and N,N,N',N'-tetramethyl dipropylene triamine.

10. The emulsifiable catalyst composition of claim 5 wherein the at least one olefinically unsaturated monomer **F** which has at least one olefinically unsaturated group which is capable of radical-induced polymerisation is selected from the group **F1** of mono-olefinically unsaturated monomers consisting of styrene, alpha-methyl styrene, vinyl toluene, esters of monohydric aliphatic linear, branched or cyclic alcohols having from 1 to 18 carbon atoms and mono-olefinically unsaturated organic monocarboxylic acids having form 3 to 12 carbon atoms, diesters of aliphatic monounsaturated dicarboxylic acids having from 4 to 12 carbon atoms, monoesters of the mono-olefinically unsaturated organic monocarboxylic acids having form 3 to 12 carbon atoms with aliphatic alcohols having more than one hydroxyl group, vinyl and allyl ethers of mon- or dihydric alcohols having up to 12 carbon atoms, vinyl ketones, unsaturated nitriles, vinyl esters of monocarboxylic linear or branched aliphatic acids having from two to twelve carbon atoms, and commercially available mixtures of vinyl esters of highly alpha-branched aliphatic monocarboxylic acids having from five to twelve carbon atoms, and wherein the ratio of the mass of the olefinically unsaturated monomers **F1** to the mass of the amino-functional compound **E** is from 5 % to 70 %.

11. The emulsifiable catalyst composition of claim 10 wherein additionally, multi-unsaturated vinyl monomers **F2** are used as vinyl monomers **F,** which monomers **F2** are selected from the group consisting of divinyl benzene, ethylene glycol divinyl ether, ethylene glycol diallyl ether, ethylene glycol di(meth)acrylate, butylene glycol divinyl ether, butylene glycol diallyl ether, butylene glycol di(meth)acrylate, neopentylglycol di(meth)acrylate, glycerol di- and tri-(meth)acrylate, and trimethylol propane di- and tri-(meth)acrylate, and wherein the ratio of the mass of the multiply olefinically unsaturated monomers **F2** to the mass of the amino-functional compound **E** is from 0.5 % to 7 %.

12. A process for the preparation of the emulsifiable catalyst composition of claim 1, comprising the steps of
- grafting a graft substrate which is an oil or a diene homo-or copolymer **A,** in a first reaction step with an unsaturated cycloaliphatic or linear or branched aliphatic acid **B1** which may have from 3 to 12 carbon atoms, and/or an unsaturated cycloaliphatic or linear or branched aliphatic acid anhydride **B2** which may have from 4 to 12 carbon atoms, to form a graft product **AB,** wherein the ratio of the mass ***m***_{A} of the graft substrate and the sum ***m***_{B} of the masses of acids **B1** and acid anhydrides **B2** is preferably from 4:1 to 15:1,
- optionally reacting the graft product **AB** with a monohydric aliphatic linear or branched alcohol **D** having from 1 to 8 carbon atoms, wherein the amount of alcohol **D** is such that at least 90 % of all acid anhydride groups present in the graft product **AB** are ring-opened under formation of an ester bond with the said alcohol **D,**
- reacting the graft product **AB,** or its reaction product with the alcohol **D,** with an amine **C** having at least one tertiary amino group, and at least one primary or secondary amino group, under formation of an amide linkage or under formation of an imide linkage, to form an amino-functional compound **E,**
- subjecting this amino-functional compound **E** to a graft reaction in aqueous emulsion, comprising dispersing the product **E** in a mixture of water and an acid for at least partial neutralisation, and subjecting the dispersion thus obtained to a graft polymerisation reaction with at least one olefinically unsaturated monomer **F** which has at least one olefinically unsaturated group which is capable of radical-induced polymerisation, to form a graft reaction product **EF,** and
- admixing one or more of a metal salt, a metal complex, and an acid to the graft reaction product **EF.**

13. The process of claim 12 where the metal is selected from the group consisting of Mg, Ca, Sr, Ba, Ce, Ti, Zr, Hf, Mn, Fe, Co, Ni, Zn, Cd, Ga, In, Ge, Sn, Pb, Sb, and Bi.

14. A method of use of the emulsifiable catalyst composition of claim 1 to catalyse crosslinking reaction in an aqueous coating composition.
